(19) Europäisches Patentamt
European Patent Office
Office européen des brevets

(11) **EP 3 087 654 B1**

(12) **FASCICULE DE BREVET EUROPEEN**

(45) Date de publication et mention de la délivrance du brevet:
**25.07.2018 Bulletin 2018/30**

(21) Numéro de dépôt: **14821784.7**

(22) Date de dépôt: **02.12.2014**

(51) Int Cl.:
*H02J 7/14* (2006.01)     *B60L 11/00* (2006.01)

(86) Numéro de dépôt international:
**PCT/FR2014/053131**

(87) Numéro de publication internationale:
**WO 2015/097356 (02.07.2015 Gazette 2015/26)**

(54) **PROCÉDÉ ET SYSTÈME DE GESTION DE BATTERIE POUR VÉHICULE AUTOMOBILE**

VERFAHREN UND SYSTEM ZUR BATTERIEVERWALTUNG FÜR KRAFTFAHRZEUGE

METHOD AND SYSTEM OF BATTERY MANAGEMENT FOR AUTOMOTIVE VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2013 FR 1363663**

(43) Date de publication de la demande:
**02.11.2016 Bulletin 2016/44**

(73) Titulaire: **Renault s.a.s**
**92100 Boulogne-Billancourt (FR)**

(72) Inventeur: **HIRON, Christian**
**78690 Les Essarts le Roi (FR)**

(56) Documents cités:
**FR-A1- 2 983 653     JP-A- 2009 055 655**
**US-A- 5 712 786**

EP 3 087 654 B1

**Description**

**Domaine technique de l'invention**

L'invention concerne un procédé de gestion énergétique d'un véhicule automobile, qui comprend notamment un procédé d'estimation du courant de sa batterie et de l'état de charge de sa batterie. Elle concerne aussi un système et un logiciel mettant en oeuvre ce procédé, ainsi qu'un véhicule automobile intégrant un tel système.

**État de la technique**

Le document US5712786 présente un exemple d'utilité de l'estimation d'un courant de batterie dans le cas particulier du contrôle de ralenti d'un moteur à combustion interne.

Pour réduire les émissions nocives, notamment de dioxyde de carbone, les véhicules automobiles sont de plus en plus équipés des systèmes suivants :

- le système dit de « micro-hybridation », qui consiste à rechercher un gain de la consommation du véhicule et de réduction de ses émissions polluantes en délestant l'alternateur du véhicule automobile en phase de roulage, notamment quand le moteur n'a pas un bon rendement, et en augmentant la tension de l'alternateur lors des freinages pour récupérer l'énergie mécanique et recharger la batterie, et
- le système connu par sa dénomination anglaise de « stop-and-start », qui permet de couper automatiquement le moteur thermique lorsque le véhicule est à l'arrêt.

En phase de préparation d'arrêt selon l'abrégé du document JP2009055655, la tension de régulation d'un alternateur est abaissée en dessous de la tension de la batterie pour estimer une température.

l'énergie, couramment appelé par l'acronyme BMS, pour « Battey Management System » en terminologie anglo-saxonne. Le BMS comprend des moyens logiciel et matériel, notamment un calculateur installé au sein du véhicule automobile, qui reçoit des données sur l'état énergétique du véhicule pour donner en sortie des commandes de gestion du véhicule automobile, et notamment des commandes de contrôle des systèmes de micro-hybridation et de stop-and-start. En remarque, le BMS remplit une fonction essentielle car sa défaillance peut induire la panne du véhicule automobile. Par exemple, si le BMS donne le feu vert au système « stop-and-start » pour couper le moteur et que la batterie n'est pas suffisamment chargée, le véhicule ne pourra pas redémarrer.

Selon une première solution de l'état de la technique, le BMS est relié à différents capteurs, en général un capteur de courant, de tension et de température, qui mesurent l'état de la batterie. La gestion énergétique du véhicule est alors déterminée à partir de l'état de la batterie, notamment son état de charge, déduit par des tables mémorisées et des calculs des mesures provenant de ces capteurs. Cette solution présente l'avantage d'une grande fiabilité puisqu'elle provient de mesures réelles de la batterie effectuées par des capteurs. En revanche, elle présente un coût élevé car ces capteurs sont très onéreux, notamment le capteur de courant.

Pour pallier cet inconvénient, d'autres solutions tentent de supprimer certains capteurs, et de les remplacer par des estimations obtenues à partir de grandeurs plus éloignées. Toutefois, ces solutions s'accompagnent d'une réduction significative de la fiabilité, ce qui induit une mauvaise gestion des émissions polluantes, voire des pannes immobilisantes des véhicules automobiles.

De tels systèmes nécessitent le recours accru à l'énergie électrique, par exemple pour le redémarrage du véhicule après son arrêt provoqué par le système « stop-and-start ». Ainsi, pour atteindre une réduction d'émission polluante optimale tout en garantissant le fonctionnement normal du véhicule automobile, il est nécessaire de gérer au mieux l'énergie électrique et donc la batterie du véhicule automobile. Pour cela, les véhicules automobiles sont équipés d'un système de gestion de l'énergie, couramment appelé par l'acronyme BMS, pour « Battery Management System » en terminologie anglo-saxonne. Le BMS comprend des moyens logiciel et matériel, notamment un calculateur installé au sein du véhicule automobile, qui reçoit des données sur l'état énergétique du véhicule pour donner en sortie des commandes de gestion du véhicule automobile, et notamment des commandes de contrôle des systèmes de micro-hybridation et de stop-and-start. En remarque, le BMS remplit une fonction essentielle car sa défaillance peut induire la panne du véhicule automobile. Par exemple, si le BMS donne le feu vert au système « stop-and-start » pour couper le moteur et que la batterie n'est pas suffisamment chargée, le véhicule ne pourra pas redémarrer.

Selon une première solution de l'état de la technique, le BMS est relié à différents capteurs, en général un capteur de courant, de tension et de température, qui mesurent l'état de la batterie. La gestion énergétique du véhicule est alors déterminée à partir de l'état de la batterie, notamment son état de charge, déduit par des tables mémorisées et des calculs des mesures provenant de ces capteurs. Ainsi par exemple, le document FR2983653 utilise un ampèremètre permettant de mesurer l'intensité instantanée consommée par le réseau électrique. Cette solution présente l'avantage d'une grande fiabilité puisqu'elle provient de mesures réelles de la batterie effectuées par des capteurs. En revanche, elle présente un coût élevé car ces capteurs sont très onéreux, notamment le capteur de courant.

Pour pallier cet inconvénient, d'autres solutions tentent de supprimer certains capteurs, et de les remplacer par des estimations obtenues à partir de grandeurs plus éloignées. Toutefois, ces solutions s'accompagnent d'une réduction significative de la fiabilité, ce qui induit une mauvaise gestion des émissions polluantes, voire des pannes immobilisantes des véhicules automobiles.

## Objet de l'invention

Le but de la présente invention est de proposer une solution de gestion d'une batterie d'un véhicule automobile qui remédie aux inconvénients des solutions de l'état de la technique.

Ainsi, un objet de l'invention est de fournir une solution de gestion de la batterie d'un véhicule automobile permettant d'optimiser la réduction des émissions polluantes du véhicule automobile tout en garantissant son fonctionnement fiable.

Plus précisément, un premier objet de l'invention est d'évaluer l'état de charge de la batterie d'un véhicule automobile à moindre coût.

Un second objet de l'invention est d'optimiser le fonctionnement d'un système de type « stop-and-start », pour minimiser les émissions polluantes d'un véhicule automobile.

A cet effet, l'invention repose sur un procédé d'estimation du courant aux bornes de la batterie d'un véhicule automobile, caractérisé en ce qu'il comprend les étapes suivantes :

- une étape de régulation de la tension de l'alternateur du véhicule automobile au cours de laquelle la tension de régulation Ub de l'alternateur est stabilisée durant une certaine période à une tension proche de celle d'équilibre de la batterie, ce qui fait tendre le courant de la batterie ICha vers zéro,
- le calcul de la résistance R des composants électriques du véhicule par la relation R = Ub / ICarb où ICarb est le courant consommé par le véhicule, égal au courant délivré par l'alternateur, durant cette période de régulation de la tension de l'alternateur à une tension proche de celle d'équilibre de la batterie,
- changement de la valeur de régulation de la tension de l'alternateur à une valeur plus haute Uh, et calcul du courant de charge IChah de la batterie par la relation IChah = IAlth - Uh / R, où IAlth est le courant délivré par l'alternateur.

Le procédé d'estimation du courant peut comprendre une étape préalable de calibration qui comprend la mémorisation dans une mémoire électronique de données relatives à la variation du courant de charge aux bornes de la batterie en fonction de la tension de régulation de l'alternateur, puis une étape d'utilisation de ces données mémorisées et du courant IChah aux bornes de la batterie calculé pour estimer le courant aux bornes de la batterie pour toute tension de régulation de l'alternateur.

Le procédé d'estimation du courant peut comprendre la répétition des étapes de calcul d'un courant de charge IChah de la batterie pour obtenir une mise à jour de l'estimation du courant de la batterie.

Le procédé d'estimation du courant peut comprendre la mise en oeuvre d'une tension de régulation aux bornes de l'alternateur en forme de créneau, entre une tension basse Ub proche de celle d'équilibre de la batterie, ce qui fait tendre le courant de la batterie ICha vers zéro, et une tension plus haute Uh pour laquelle le calcul du courant de charge IChah de la batterie est mis en oeuvre.

L'invention porte aussi sur un procédé d'estimation de l'état de charge d'une batterie, qui comprend la mise en oeuvre d'un procédé d'estimation du courant aux bornes de la batterie tel que décrit précédemment, puis la déduction de la quantité de charge correspondant à ce courant estimé pour modifier une jauge estimant l'état de charge de la batterie.

Le procédé d'estimation de l'état de charge d'une batterie peut comprendre tout ou partie des étapes suivantes :

- une étape de mesure de la tension à vide de la batterie lors d'un stationnement en longue durée du véhicule automobile, une étape d'estimation de l'état de charge à partir de cette mesure de la tension à vide et une étape de réinitialisation de la jauge d'état de charge à partir de cette estimation ;
- lors d'une phase de roulage mettant en oeuvre la charge de la batterie à partir de l'alternateur soumis à une tension de régulation constante, estimation du courant de charge ICha de la batterie, puis calcul de la quantité de charge transmise à la batterie pour incrémenter la jauge de cette valeur par la formule suivante :

$$((ICha \times \mathit{temps}\,(s) / 3600) / CNom) \times 100$$

Où *temps* représente la durée en seconde de cette phase de roulage et de charge de la batterie,
CNom représente la capacité nominale de la batterie, exprimée en Ah ;

- lors d'une phase d'arrêt du moteur du véhicule déclenchée par un système stop-and-start et/ou une phase de délestage en phase de roulage du véhicule déclenchée par un système de micro-hybridation, la jauge d'état de charge de la batterie est décrémentée de la quantité de charge qui est fournie par la batterie, calculée par la formule suivante :

$$((ICar \times temps\,(s) / 3600) / CNom) \times 100 \ ;$$

Où *temps* représente la durée en seconde de cette phase de décharge de la batterie,
ICar représente l'intensité du courant consommé par le véhicule automobile.

L'invention porte aussi sur un procédé de gestion énergétique d'un véhicule automobile équipé d'un système stop-and-start et/ou d'un système de micro-hybridation caractérisé en ce qu'il comprend la mise en oeuvre d'un procédé d'estimation de l'état de charge de sa batterie tel que décrit précédemment pour renseigner une jauge d'état de charge, et une étape de pilotage du fonctionnement du système « stop-and-start » et/ou du système de micro-hybridation du véhicule et/ou de détermination de la tension de régulation de l'alternateur du véhicule à partir de cette jauge d'état de charge.

Le procédé de gestion énergétique peut comprendre les étapes suivantes :

- une étape préalable consistant à mémoriser des données représentatives de l'évolution de la tension aux bornes de la batterie en cas d'arrêt du moteur du véhicule déclenché par le système stop-and-start, ces données mémorisées étant établies pour un certain état de charge seuil de la batterie du véhicule automobile au-dessous duquel il est considéré que le véhicule présenterait un risque de panne,
et

  • lors d'une phase de roulage du véhicule automobile, une étape d'arrêt du moteur du véhicule est déclenchée par le système stop-and-start seulement si la jauge d'état de charge de la batterie est supérieure ou égale à une valeur seuil prédéfinie ; puis
  • une étape de mesures de la tension aux bornes de la batterie pendant un tel arrêt du moteur, et
  • une étape de comparaison des mesures de tension avec les données mémorisées lors de l'étape préalable, et une étape d'inhibition du système stop-and-start si une ou plusieurs mesures sont inférieures ou égales à une ou plusieurs données mémorisées correspondantes.
    Et/ou
  • lors d'une phase de roulage, une étape de délestage de l'alternateur du véhicule est déclenchée par le système de micro-hybridation seulement si la jauge d'état de charge est supérieure ou égale à une valeur seuil prédéfinie ; puis
  • une étape de mesures de la tension aux bornes de la batterie pendant un tel délestage si la tension de la batterie est supérieure à une tension minimale admise pour le réseau électrique de bord du véhicule, et
  • une étape de comparaison des mesures de tension avec les données mémorisées lors de l'étape préalable, et une étape d'inhibition du système de « micro-hybridation » si une ou plusieurs mesures sont inférieures ou égales à une ou plusieurs données mémorisées correspondantes.

L'étape préalable consistant à mémoriser des données représentatives de l'évolution de la tension aux bornes de la batterie en cas d'arrêt du moteur du véhicule déclenché par le système stop-and-start peut être mise en oeuvre de la manière suivante :

- mémorisation de plusieurs mesures de la tension aux bornes de la batterie en fonction du temps en cas d'arrêt du moteur du véhicule déclenché par le système stop-and-start à partir d'un état de charge seuil choisi de la batterie ou mémorisation de plusieurs mesures de la tension aux bornes de la batterie en fonction du temps, pour plusieurs températures de la batterie, en cas d'arrêt du moteur du véhicule déclenché par le système stop-and-start à partir d'un état de charge seuil choisi de la batterie ; et
- extrapolation des mesures de tension aux bornes de la batterie pour obtenir une évolution continue de la tension aux bornes de la batterie en fonction du temps en cas d'arrêt du moteur du véhicule déclenché par le système stop-and-start.

Le procédé de gestion énergétique d'un véhicule automobile peut comprendre les étapes suivantes :

- étape préalable de calibration, qui permet de mémoriser le courant obtenu au niveau de l'alternateur du véhicule lors de la mise en oeuvre d'une phase de délestage par le système de micro-hybridation dans le cas d'une batterie chargée à un état de charge seuil, en fonction du courant total consommé par le véhicule, de la température de la batterie et du CCA (Cold Cranking Ampere) ; et

- si la tension de la batterie est sensiblement égale à la valeur minimale admise par le réseau électrique du véhicule en phase de roulage et que le système de micro-hybridation met en oeuvre une phase de délestage :

  • maintien de la tension de régulation de l'alternateur à cette valeur minimale de tension et suivi de l'évolution du courant de l'alternateur, et
  • si le courant de l'alternateur dépasse une valeur mémorisée pour ces mêmes conditions de consommation de courant total par le véhicule, de température de la batterie et de CCA, mise en oeuvre de l'inhibition du système de micro-hybridation.

En remarque, cette solution décrite ci-dessus apporte une réponse à un problème technique de sécurisation du fonctionnement d'un véhicule automobile, qui pourrait être en variante utilisée avec tout autre véhicule, comprenant tout autre système d'estimation ou mesure de l'état de charge de sa batterie.

Le procédé de gestion énergétique d'un véhicule automobile peut comprendre une étape de régulation de la tension de l'alternateur à une valeur haute permettant la recharge de la batterie en cas d'inhibition du système stop-and-start et/ou de micro-hybridation.

L'invention porte aussi sur un système de gestion d'un véhicule automobile équipé d'un système stop-and-start et/ou d'un système de micro-hybridation, caractérisé en ce qu'il comprend des moyens matériels et/ou logiciels comprenant une unité de commande assurant la mise en oeuvre du pilotage de la régulation de la tension de l'alternateur du véhicule automobile et du système « stop-and-start » et/ou du système de micro-hybridation en mettant en oeuvre un procédé de gestion énergétique du véhicule automobile tel que décrit précédemment.

L'invention porte aussi sur un véhicule automobile équipé d'une batterie et d'un système « stop-and-start » et/ou d'un système de « micro-hybridation », caractérisé en ce qu'il comprend un système de gestion tel que décrit précédemment.

L'invention porte aussi sur un support d'enregistrement de données lisible par une unité de commande d'un véhicule automobile, sur lequel est enregistré un programme informatique comprenant des moyens de codes de programme informatique de mise en oeuvre des étapes d'un procédé tel que décrit précédemment.

L'invention porte aussi sur un programme informatique comprenant un moyen de codes de programme informatique adapté à la mise en oeuvre des étapes d'un procédé tel que décrit précédemment, lorsque le programme est exécuté sur une unité de commande d'un véhicule automobile.

## Description des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :

La figure 1 représente l'évolution de la tension de régulation de l'alternateur selon un mode de réalisation de l'invention.

La figure 2 représente une vue agrandie d'un créneau de tension de régulation mis en oeuvre selon un mode de réalisation de l'invention.

La figure 3 représente des courbes d'évolution du courant de charge d'une batterie en fonction de la tension de régulation de l'alternateur dans différentes conditions.

La figure 4 représente les courbes d'évolution de la tension de régulation de l'alternateur et du courant de la batterie estimé selon un scénario et selon un mode de réalisation de l'invention.

La figure 5 représente l'évolution avec le temps de la tension aux bornes de la batterie en cas d'arrêt du moteur du véhicule par un système stop-and-start.

La figure 6 représente les courbes d'évolution avec le temps de la tension aux bornes d'une batterie dans un état de charge seuil pour plusieurs températures en cas d'arrêt du moteur du véhicule par un système stop-and-start.

Les figures 7 et 8 illustrent respectivement deux scénarios différents permettant d'illustrer le fonctionnement du procédé de gestion énergétique d'un véhicule automobile selon un mode de réalisation de l'invention dans le cas d'un arrêt du moteur par un système stop-and-start.

Les figures 9 et 10 illustrent respectivement deux scénarios différents permettant d'illustrer le fonctionnement du procédé de gestion énergétique d'un véhicule automobile selon un mode de réalisation de l'invention dans le cas d'un fonctionnement d'un système de micro-hybridation.

**Description de modes préférentiels de l'invention**

L'invention repose sur une unité de gestion de l'énergie d'un véhicule automobile (BMS) qui remplit les fonctions suivantes dans une phase de fonctionnement normal du véhicule :

- elle adapte la tension de l'alternateur, par un dispositif de régulation de cette tension, pour répondre aux besoins des composants consommateurs du véhicule automobile. Par exemple, en phase de freinage du véhicule automobile, la tension de régulation de l'alternateur est augmentée (par exemple jusqu'à 15V) pour favoriser la transmission d'énergie à la batterie ;
- elle répartit les phases de fourniture d'énergie au véhicule automobile entre la batterie et l'alternateur : dans une phase de charge de la batterie, l'alternateur fournit l'énergie pour cette charge et pour l'alimentation des composants consommateurs, et dans une phase de délestage, la batterie fournit cette énergie électrique ;
- quand cela est possible, lors des arrêts du véhicule, elle stoppe le moteur pour réduire les émissions polluantes ;
- en phase de roulage, elle garantit une tension disponible minimale (par exemple 12V), pour assurer certaines fonctions comme la direction assistée.

Comme cela ressort des fonctionnalités précédentes, le BMS du véhicule pilote son fonctionnement pour atteindre une réduction optimale des émissions polluantes et de sa consommation en carburant, tout en assurant son fonctionnement fiable et avec sécurité. Pour cela, il met en oeuvre un procédé d'estimation de l'état de charge de la batterie du véhicule automobile, souvent dénommé par l'acronyme SOC pour la dénomination anglo-saxonne de « State Of Charge ». La connaissance de cet état de charge, sous forme de jauge, est en effet essentielle, et permet au BMS d'assurer les niveaux de fonctionnalité suivants :

- il assure en priorité la fiabilité du véhicule en évitant une panne qui pourrait être causée par un état de charge trop bas de la batterie, et maintient pour cela l'état de charge de la batterie dans une plage de fonctionnement acceptable ;
- lorsque la batterie est dans cette plage de fonctionnement acceptable, il pilote le fonctionnement du véhicule pour minimiser les émissions polluantes (notamment de $CO_2$) tout en maintenant la batterie dans un état correspondant à cette plage de fonctionnement acceptable, à l'aide de la jauge d'état de charge.

Selon le mode de réalisation de l'invention, le procédé d'estimation de l'état de charge de la batterie est mis en oeuvre sans utilisation d'un capteur de courant, ce qui permet d'éviter le coût que représente ce capteur. Toutefois, la prise en compte de l'intensité du courant aux bornes de la batterie est nécessaire pour l'estimation de l'état de charge de la batterie. D'autre part, le procédé utilise la tension aux bornes de la batterie et selon une option avantageuse, sa température. La tension peut par exemple être mesurée au travers de l'alimentation du calculateur contenant le BMS. La température peut être aisément estimée par calcul. Donc, selon l'invention, ce BMS peut fonctionner sans aucun capteur.

Le procédé met donc en oeuvre une étape d'estimation du courant de la batterie, en considérant d'abord la relation suivante :

$$IAlt = ICar + ICha$$

Où IAlt est le courant délivré par l'alternateur, qui est connu, typiquement calculé à partir de son couple, de sa tension de sortie et de son régime, ICha est le courant consacré à la charge de la batterie,
ICar est le courant consommé par tous les autres composants consommateurs du véhicule, en dehors de la batterie, que nous appellerons plus simplement courant consommé par le véhicule automobile.

Le véhicule considéré est équipé d'un dispositif de régulation de la tension aux bornes de l'alternateur. Le procédé met alors en oeuvre une phase particulière durant laquelle la tension de régulation de l'alternateur est stabilisée durant un certain temps à une tension proche de celle d'équilibre de la batterie, ce qui fait tendre son courant ICha vers zéro, quels que soient son état de charge et sa température. Durant cette période particulière, la relation précédente devient donc :

$$IAlt = ICar$$

Cette période particulière permet ainsi de connaître le courant de consommation du véhicule à la tension particulière imposée, par exemple de 12,9 V.

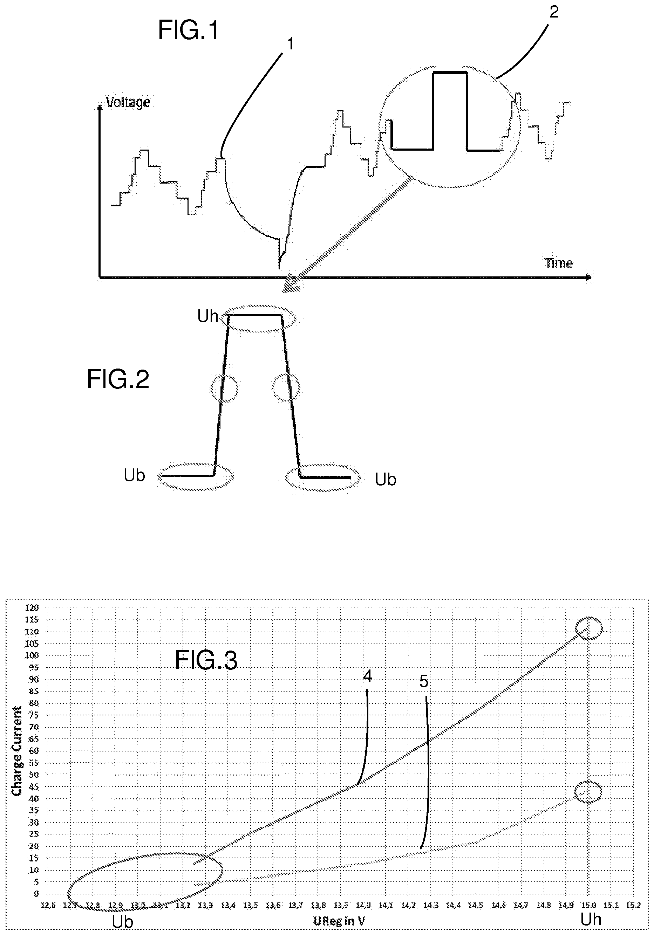

La figure 1 représente une courbe 1 d'évolution de la tension de régulation de l'alternateur, qui comprend un créneau 2, plus particulièrement représenté en figure 2, pour lequel la tension évolue entre deux paliers, un palier haut de tension haute Uh, par exemple de 15V, entouré de deux périodes de tension à paliers bas Ub, par exemple de 12,9 V. La pente d'évolution de la tension entre ces deux tensions Uh, Ub est choisie de sorte à respecter le confort des passagers du véhicule.

Comme cela a été explicité ci-dessus, le palier bas est choisi pour obtenir un courant de batterie nul, ce qui permet d'obtenir une valeur de courant ICarb consommé par le véhicule. Comme les composants électriques du véhicule automobile sont de type résistifs, on en déduit la résistance globale de ces composants, appelée plus simplement résistance R du véhicule, par la relation :

$$R = Ub \,/\, ICarb$$

Pour le palier haut de tension Uh, nous avons les relations suivantes :

$$Uh = R \,.\, ICarh$$

$$IAlth = ICarh + IChah$$

Donc

$$IChah = IAlth - ICarh = IAlth - Uh/R$$

Où IChah est le courant de la batterie à la tension haute Uh, IAlth est le courant de l'alternateur à la tension haute, connu, ICarh et le courant consommé par le véhicule à la tension haute, s'élevant à Uh / R.

Il ressort que la période particulière précédente permet de calculer une valeur de courant IChah aux bornes de la batterie. Cette valeur est calculée à partir de valeurs réelles, elle est donc précise. Elle est ensuite utilisée pour établir une estimation du courant de la batterie pour toute autre valeur de régulation de la tension de l'alternateur.

Pour cela, le procédé utilise une étape préalable de calibration, qui permet de mémoriser des données sur la forme de la courbe de variation de ce courant de charge de la batterie en fonction de la tension de régulation de l'alternateur. Ces données sont par exemple obtenues par des mesures en laboratoire, réalisées une fois pour toutes. A partir de ces données, la connaissance d'une seule valeur de courant IChah, au niveau du palier haut, permet de tracer toute la courbe d'évolution du courant, telle que représentée par exemple par les courbes 4 et 5 de la figure 3. Ce tracé est notamment possible à partir d'un seul point parce que ces courbes ont une forme particulière. En variante, il serait possible d'obtenir plusieurs valeurs de courant selon le procédé décrit ci-dessus, pour obtenir un tracé plus précis. Cette approche permet, à partir d'une mesure réelle, de déterminer toutes les valeurs de courant associées aux autres valeurs de tension de régulation avec précision. Le fait de partir d'une valeur réelle à un instant donné est très avantageux car cela permet de tenir compte indirectement du changement de comportement de la batterie avec son vieillissement (par exemple, des problèmes de sulfatation), de l'historique récent de la batterie et de la température, sans même la mesurer. Les courbes 4, 5 intègrent en effet tous ces paramètres.

En conclusion, le procédé d'estimation d'état de charge de la batterie comprend d'abord un procédé d'estimation du courant de charge de la batterie, qui comprend les étapes suivantes :

- calcul de la résistance électrique des composants électriques du véhicule automobile ;
- calcul d'une valeur de courant de la batterie à partir de cette résistance, de la connaissance d'une tension de régulation haute de l'alternateur et du courant associé aux bornes de l'alternateur ;

- estimation du courant de la batterie en fonction de la tension de régulation quelconque de l'alternateur à partir de données mémorisées par le BMS, par exemple des données de calibration.

La résistance électrique R des composants consommateurs électriques du véhicule automobile a été calculée à l'instant considéré par le procédé décrit.

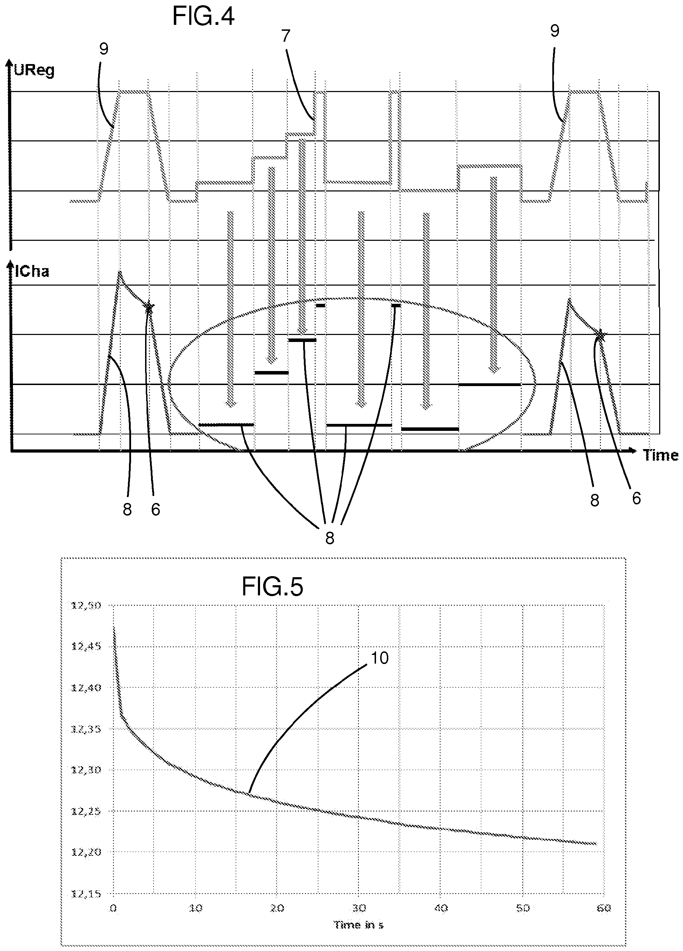

La figure 4 représente à titre d'exemple une courbe 7 de variation de la tension de régulation aux bornes de l'alternateur, puis une courbe 8 (discontinue) d'évolution correspondante du courant de charge de la batterie en fonction du temps, ce dernier étant calculé par le procédé décrit précédemment. On s'aperçoit donc bien que pour chaque changement de valeurs de la tension de régulation, une nouvelle valeur de courant est obtenue. En remarque, le calcul du courant est ainsi mis en oeuvre pour chaque changement de la tension de régulation de l'alternateur. On note aussi que la courbe 7 de régulation de la tension de l'alternateur met en oeuvre deux créneaux 9, tels qu'explicités précédemment, qui ont pour unique fonction de permettre la mise en oeuvre d'une mesure réelle du courant de charge IChah 6 de la batterie, alors que pour les autres instants, cette tension de régulation répond aux autres contraintes d'optimisation énergétique du véhicule, notamment de réponse à ses besoins électriques.

En remarque, ce procédé d'estimation du courant de charge de la batterie est répété périodiquement, pour rafraîchir à chaque nouvelle itération l'estimation du courant, comme cela apparaît sur l'illustration par la répétition des créneaux.

Ce procédé d'estimation du courant de charge de la batterie permet donc de remplacer un capteur de courant, avec une précision satisfaisante, pour alimenter en entrée le procédé d'estimation de l'état de charge de la batterie, qui gère une jauge d'état de charge de la batterie. Ce procédé d'estimation d'état de charge de la batterie comprend une étape de calcul de la charge transmise à la batterie à partir du courant de charge connu, par le calcul explicité précédemment.

L'avantage de l'approche précédente est qu'elle permet d'ajuster l'estimation du courant avec le temps, ce qui permet d'obtenir une estimation fiable quelle que soit la température de la batterie ou son état de vieillissement.

Le procédé d'estimation de l'état de charge de la batterie utilise en complément d'autres phases du véhicule automobile qui correspondent à d'autres états du véhicule automobile.

D'abord, lorsque le véhicule est en stationnement de longue durée, il est possible d'estimer un état de charge de la batterie de manière précise. Pour cela, le calculateur du BMS est réveillé périodiquement, par exemple toutes les deux heures, pour mesurer et enregistrer sa tension d'alimentation. Le courant circulant sur le réseau étant très faible, cette tension d'alimentation correspond sensiblement à la tension à vide de la batterie, souvent dénommée par l'acronyme OCV pour la dénomination anglo-saxonne de « Open Circuit Voltage ». Or, il est connu qu'il existe une relation entre cette tension OCV et l'état de charge SOC de la batterie. Ainsi, un tel stationnement de longue durée permet d'obtenir une valeur précise de l'état de charge de la batterie du véhicule, valeur qui est utilisée pour calibrer la jauge d'état de charge, la réinitialiser avant le prochain usage du véhicule automobile.

En résumé, la jauge d'état de charge va permettre d'atteindre une valeur précise en permanence en réunissant les mesures et estimations suivantes :

- elle est initialisée lors d'un stationnement longue durée, comme mentionné ci-dessus. En remarque, si le stationnement n'est pas assez long, sa valeur reste égale à sa dernière évaluation ;
- lors des phases de roulage conventionnelles mettant en oeuvre la charge de la batterie à partir de l'alternateur, le BMS calcule le courant ICha de charge de la batterie, comme explicité précédemment, puis en déduit une valeur de quantité de charge transmise à la batterie, pour incrémenter la jauge de cette valeur. Cette quantité de charge d'incrémentation peut s'exprimer par la formule suivante :

$$((\text{ICha} \times temps \text{ (s) } / 3600) / \text{CNom}) \times 100$$

Où *temps* représente la durée en seconde de cette phase de charge considérée,
CNom représente la capacité nominale de la batterie, exprimée en Ah ;

- lors des phases d'arrêt du moteur déclenchées par le système stop-and-start et les phases de délestage en roulage déclenchées par le système de micro-hybridation, la batterie alimente alors le véhicule en énergie électrique en lui fournissant un courant ICar et se décharge. La jauge est décrémentée de la quantité de charge qui est fournie, qui peut être calculée par la formule suivante :

$$((ICar \times temps \text{ (s)} / 3600) / CNom) \times 100$$

*temps* représentant la durée en seconde de cette phase de décharge.

Cette estimation de l'état de charge de la batterie donne des bons résultats et permet une optimisation très satisfaisante du fonctionnement d'un véhicule automobile. Toutefois, une erreur sur cette estimation pourrait avoir des conséquences importantes dans les deux situations suivantes :

- lors d'un arrêt du moteur provoqué par le système stop-and-start, si l'état de charge réel de la batterie est trop bas, plus bas que celui indiqué par la jauge, il ne sera pas possible de redémarrer le véhicule automobile ;
- lors du délestage par le système de micro-hybridation, si la tension du réseau électrique descend sous une valeur seuil, en général de 12V, alors certaines fonctions importantes, comme la direction assistée, ne peuvent plus être assurées.

Dans la pratique, pour éviter les deux situations précédentes, il est choisi de n'activer ces systèmes de micro-hybridation et de stop-and-start que lorsque l'état de charge de la batterie est supérieur ou égal à un seuil SOCs, par exemple choisi à 70%, sur la base de la jauge d'état de charge définie précédemment. Toutefois, le mode de réalisation de l'invention met en oeuvre des solutions de sécurité supplémentaires, qui permettent de pallier une éventuelle erreur dans l'estimation de l'état de charge de la batterie du véhicule automobile selon le procédé décrit précédemment, et éviter une panne du véhicule, au sein d'un procédé de gestion énergétique d'un véhicule automobile équipé d'une fonction « stop-and-start » et/ou de « micro-hybridation ».

La première solution de sécurité est mise en oeuvre en cas d'arrêt du véhicule automobile par le système stop-and-start. Dans une telle situation, la batterie alimente seule tous les composants électriques du véhicule. La figure 5 représente la courbe 10 d'évolution avec le temps de la tension aux bornes de la batterie dans une telle situation, en considérant une décharge de la batterie à courant constant. Il apparaît que cette courbe dépend de l'état de charge de la batterie : plus cet état de charge est bas, plus cette courbe est basse, ou, autrement dit, cette courbe se décale vers le bas si l'état de charge initial de la batterie diminue.

En remarque, une telle courbe 10 est établie préalablement, dans une phase de calibration du procédé, qui consiste à mémoriser des données numériques utiles aux procédés décrits précédemment. Pour établir cette courbe 10, plusieurs essais de décharge de la batterie, pour quelques courants, sont réalisés, durant lesquels quelques mesures de tension en fonction du temps sont obtenues. Une extrapolation de ces mesures permet d'obtenir une courbe d'évolution continue en fonction du temps.

Le procédé consiste donc à suivre l'évolution de la tension aux bornes de la batterie avec le temps, par une première étape de sa mesure ou de son estimation périodique, par exemple toutes les cinq secondes, dès l'arrêt du moteur. Dans une seconde étape, cette valeur de tension est comparée à la courbe mémorisée préalablement, par exemple dans une phase de calibration, pour un état de charge seuil SOCs de la batterie (par exemple 70% comme mentionné précédemment). Tant que cette tension reste au-dessus de cette courbe, le BMS continue sa gestion en fonctionnement normal du véhicule, à partir de la jauge d'état de charge telle que définie précédemment. Si cette tension passe sous cette courbe, le moteur est démarré et les fonctions micro-hybride et stop-and-start sont inhibées, jusqu'à ce que la jauge d'état de charge remonte à une valeur sécuritaire au-delà d'un seuil de sécurité haut, au-dessus du seuil SOCs mentionné précédemment, par exemple de 80%. Par la suite, le BMS reprend son mode de fonctionnement normal et sa gestion à partir de la jauge d'état de charge.

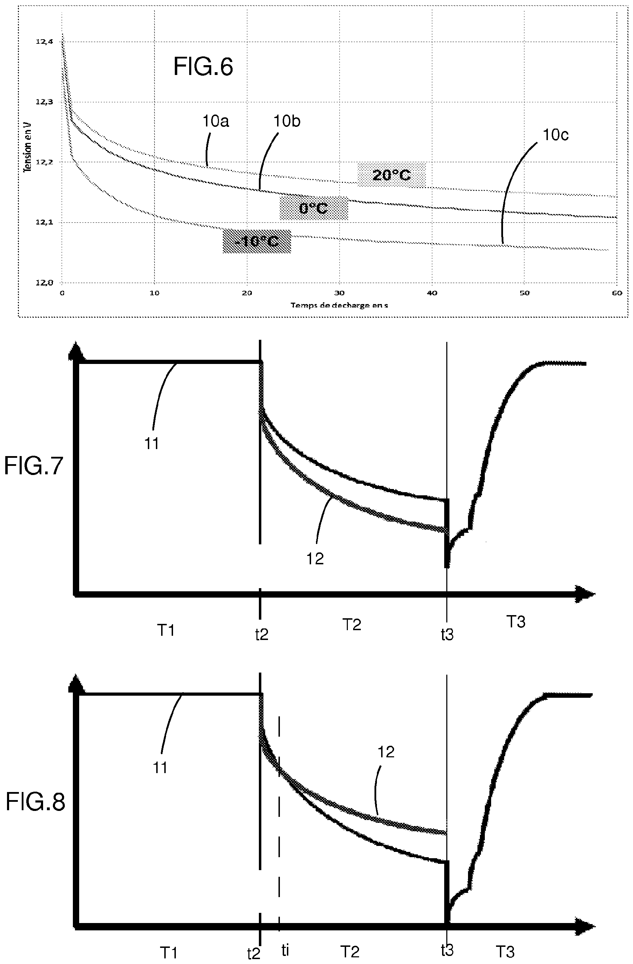

En remarque, comme cette courbe d'évolution de la tension dépend de la température, l'étape préalable de calibration peut permettre le tracé de plusieurs courbes 10a, 10b, 10c pour des valeurs de températures constantes différentes, comme représenté sur la figure 6. Ces différentes courbes sont stockées sous forme de données numériques dans une mémoire électronique associée au BMS. Le procédé met ensuite en oeuvre une mesure ou une estimation de la température afin de choisir la courbe associée, pour la mise en oeuvre des mêmes étapes que celles explicitées précédemment.

Les figures 7 et 8 illustrent respectivement deux scénarios différents à titre d'exemple, permettant d'illustrer le fonctionnement du procédé de gestion énergétique d'un véhicule automobile décrit ci-dessus. Dans les deux cas, un véhicule se trouve d'abord dans une première période T1 de roulage, durant laquelle la tension aux bornes de sa batterie, représentée par les courbes 11, reste constante. Durant cette période, la gestion du véhicule est mise en oeuvre par le BMS à partir de la jauge d'état de charge. A un instant t2 d'arrêt du véhicule, le système « stop-and-start » commande l'arrêt du véhicule. La courbe 11 descend alors pendant une seconde période T2, de manière différente dans les deux cas, puisqu'elle dépend notamment de l'état de charge de la batterie, du courant consommé, de la température, etc. Cette courbe 11 est comparée à la courbe 12 correspondante, préalablement établie, comme explicité précédemment, pendant toute la période T2.

Dans le premier scénario, la courbe 11 reste toujours au-dessus de la courbe 12, et le BMS continue sa gestion normale du système stop-and-start, jusqu'au redémarrage du moteur à l'instant t3. Dans une troisième période T3, l'alternateur recharge la batterie et la courbe 11 remonte.

Dans le second scénario, la courbe 11 passe sous la courbe 12 à l'instant ti, ce qui est significatif d'une situation à risque. Le BMS inhibe alors le système stop-and-start et la gestion à partir de la jauge BMS, et contrôle la situation sur la base de la comparaison des deux courbes 11, 12. La solution de sécurité définie va donc permettre au BMS de prendre les mesures nécessaires dans une telle situation. Le BMS va demander un redémarrage moteur et inhiber tout autre stop tant qu'une nouvelle mesure d'état de charge n'est pas satisfaisante.

La seconde solution de sécurité est destinée à une phase de mise en oeuvre du système micro-hybride du véhicule automobile. L'objectif est ici de garantir que la tension du réseau électrique du véhicule reste au-dessus de la tension minimale admise Umin, comme mentionné précédemment.

Lorsque la tension de la batterie est supérieure à cette valeur Umin, la mise en oeuvre du système de micro-hybridation peut être gérée comme lors de l'arrêt du moteur par le système stop-and-start, puisque dans cette phase, la batterie assure seule l'alimentation du véhicule et voit sa tension diminuer comme explicité précédemment. La mise en oeuvre d'un procédé conforme à la première solution de sécurité permet de garantir que l'état de charge de la batterie ne descend pas sous la valeur seuil d'état de charge. Si la valeur de tension de la batterie descend sous la courbe de référence, la fonction de micro-hybridation est inhibée et la batterie rechargée par l'alternateur, par la mise en oeuvre d'une tension de régulation élevée.

Si la tension de la batterie est égale à la valeur Umin, la première solution de sécurité ne convient plus car on ne peut pas laisser descendre la tension de la batterie. Dans un tel cas, la seconde solution de sécurité va reposer sur l'évolution du courant, en conservant la tension de régulation du véhicule constante à la valeur minimale Umin.

En effet, dans une telle situation, pour respecter cette valeur de tension de régulation Umin, le courant de la batterie IBat va diminuer avec le temps, et cette diminution va être compensée par une augmentation du courant provenant de l'alternateur IAlt, en considérant que le courant consommé par le véhicule ICar soit constant.

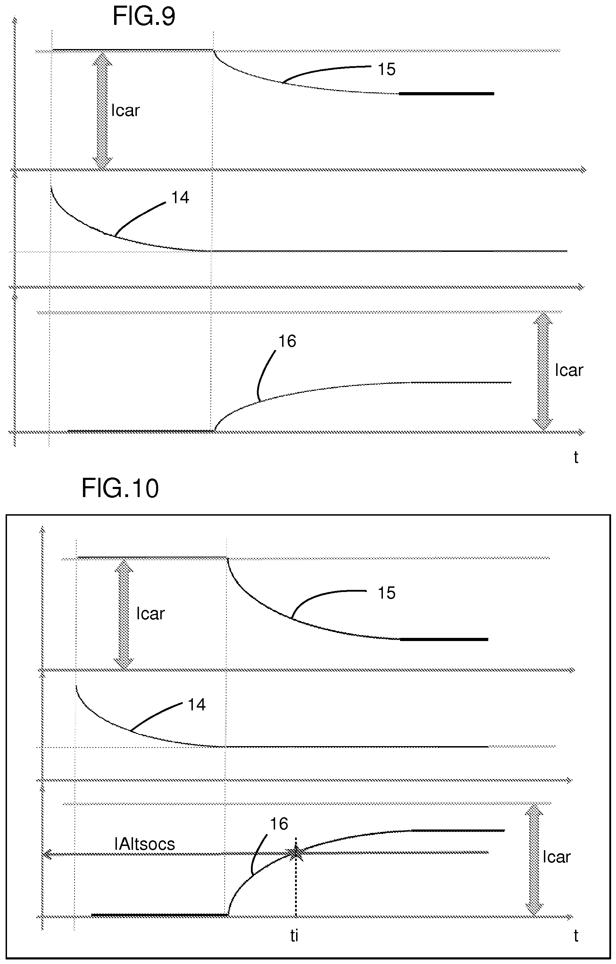

Les figures 9 et 10 illustrent ainsi deux scénarios différents. Sur ces figures, la courbe 14 du milieu représente l'évolution de la tension de régulation de l'alternateur, qui descend jusqu'à la valeur Umin. La courbe 15 du haut illustre l'évolution du courant provenant de la batterie, qui descend sous la valeur Icar. La courbe 16 du bas illustre l'évolution du courant IAlt fourni par l'alternateur, qui augmente de sorte que la somme des courants de la batterie et de l'alternateur IBat+IAlt reste constante et égale au courant consommé par le véhicule automobile Icar. Cette dernière valeur peut être estimée, comme cela a été expliqué précédemment et le courant de l'alternateur est connu. Les courbes de courant 15, 16 se stabilisent ensuite à une certaine valeur, qui dépend notamment de l'état de charge de la batterie.

Il est prévu une étape de calibration, qui permet de connaître le courant IAltsocs obtenu au niveau de l'alternateur lors de la mise en oeuvre de la seconde solution de sécurité dans le cas d'une batterie chargée à l'état de charge seuil SOCs, en fonction du courant total consommé par le véhicule, de la température de la batterie et du CCA, acronyme de « Cold Cranking Ampere », qui caractérise la puissance de la batterie en A. Dans le second scénario illustré par la figure 10, le courant de l'alternateur passe au-dessus de ce courant IAltsocs à un instant ti, ce qui signifie que dans un tel cas, l'état de charge de la batterie est sous le seuil SOCs. Par sécurité, les fonctions micro-hybride et stop-and-start sont alors inhibées, jusqu'à ce que la jauge d'état de charge atteigne de nouveau une valeur élevée au-dessus du seuil d'état de charge.

L'invention porte aussi sur un procédé de gestion énergétique d'un véhicule automobile, qui regroupe tous les mécanismes décrits précédemment, notamment un procédé d'estimation de l'état de charge d'une batterie du véhicule automobile sans utilisation d'un capteur de courant et un procédé de sécurisation supplémentaire pour éviter les deux pannes potentielles mentionnées précédemment lors de la mise en oeuvre des systèmes stop-and-start et de micro-hybridation.

L'invention porte aussi sur un support d'enregistrement de données lisible par l'unité de commande, sur lequel est enregistré un programme informatique comprenant des moyens de codes de programme informatique de mise en oeuvre des étapes des procédés décrits précédemment. Ce support peut être intégré au sein d'un BMS de véhicule automobile.

Elle porte aussi sur un programme informatique comprenant un moyen de codes de programme informatique adapté à la réalisation des étapes des procédés, lorsque le programme est exécuté sur l'unité de commande.

Avantageusement, l'invention pourra trouver application dans le domaine de l'automobile, notamment dans le cadre d'un véhicule automobile équipé d'un système de micro-hybridation et/ou de stop-and-start. Elle est particulièrement adaptée à un véhicule équipé d'une batterie fonctionnant avec une technologie plomb, mais elle peut aussi être adaptée à d'autres technologies de batteries, comme par exemple une batterie reposant sur un couplage « Double Layer Capacitor/ Batterie plomb » ou sur les technologies alcalines ou lithium.

Outre les avantages déjà explicités précédemment, la solution présente en outre les avantages suivants :

- elle n'utilise pas de capteur de courant, ni en option de capteur de température et/ou de tension ;
- elle est universelle, les lois de gestion mises en oeuvre par les procédés explicités précédemment peuvent être implémentées au sein d'un calculateur de n'importe quel véhicule automobile ;
- elle prend en compte automatiquement les modifications de comportement d'une batterie avec son vieillissement : en effet, les baisses de performance de la batterie entraineront automatiquement des inhibitions de plus en plus récurrentes des systèmes de micro-hybridation et de stop-and-start, ainsi que des recharges plus fréquentes de la batterie ;
- si une batterie sous-dimensionnée est installée dans un véhicule, les lois de gestion mises en oeuvre vont s'adapter automatiquement à l'énergie inférieure disponible au niveau de la batterie, pour garantir un bon fonctionnement du véhicule.

**Revendications**

1. Procédé d'estimation du courant aux bornes de la batterie d'un véhicule automobile, **caractérisé en ce qu'**il comprend les étapes suivantes :

   - une étape de régulation de la tension de l'alternateur du véhicule automobile au cours de laquelle la tension de régulation Ub de l'alternateur est stabilisée durant une certaine période à une tension proche de celle d'équilibre de la batterie, ce qui fait tendre le courant de la batterie ICha vers zéro,
   - le calcul de la résistance R des composants électriques du véhicule par la relation R = Ub / ICarb où ICarb est le courant consommé par le véhicule, égal au courant délivré par l'alternateur, durant cette période de régulation de la tension de l'alternateur à une tension proche de celle d'équilibre de la batterie,
   - changement de la valeur de régulation de la tension de l'alternateur à une valeur plus haute Uh, et calcul du courant de charge IChah de la batterie par la relation IChah = IAlth - Uh / R, où IAlth est le courant délivré par l'alternateur.

2. Procédé d'estimation du courant selon la revendication précédente, **caractérisé en ce qu'**il comprend une étape préalable de calibration qui comprend la mémorisation dans une mémoire électronique de données relatives à la variation du courant de charge aux bornes de la batterie en fonction de la tension de régulation de l'alternateur, puis une étape d'utilisation de ces données mémorisées et du courant IChah aux bornes de la batterie calculé pour estimer le courant aux bornes de la batterie pour toute tension de régulation de l'alternateur.

3. Procédé d'estimation du courant selon l'une des revendications précédentes, **caractérisé en ce qu'**il comprend la répétition des étapes de calcul d'un courant de charge IChah de la batterie pour obtenir une mise à jour de l'estimation du courant de la batterie.

4. Procédé d'estimation du courant selon l'une des revendications précédentes, **caractérisé en ce qu'**il comprend la mise en oeuvre d'une tension de régulation aux bornes de l'alternateur en forme de créneau, entre une tension basse Ub proche de celle d'équilibre de la batterie, ce qui fait tendre le courant de la batterie ICha vers zéro, et une tension plus haute Uh pour laquelle le calcul du courant de charge IChah de la batterie est mis en oeuvre.

5. Procédé d'estimation de l'état de charge d'une batterie d'un véhicule automobile, **caractérisé en ce qu'**il comprend la mise en oeuvre d'un procédé d'estimation du courant aux bornes de la batterie selon l'une des revendications précédentes, puis la déduction de la quantité de charge correspondant à ce courant estimé pour modifier une jauge estimant l'état de charge de la batterie.

6. Procédé d'estimation de l'état de charge d'une batterie d'un véhicule automobile selon la revendication précédente, **caractérisé en ce qu'**il comprend tout ou partie des étapes suivantes :

   - une étape de mesure de la tension à vide de la batterie lors d'un stationnement en longue durée du véhicule automobile, une étape d'estimation de l'état de charge à partir de cette mesure de la tension à vide et une étape de réinitialisation de la jauge d'état de charge à partir de cette estimation ;
   - lors d'une phase de roulage mettant en oeuvre la charge de la batterie à partir de l'alternateur soumis à une tension de régulation constante, estimation du courant de charge ICha de la batterie, puis calcul de la quantité de charge transmise à la batterie pour incrémenter la jauge de cette valeur par la formule suivante :

$$((ICha \times temps \, (s) / 3600) / CNom) \times 100$$

Où *temps* représente la durée en seconde de cette phase de roulage et de charge de la batterie, CNom représente la capacité nominale de la batterie, exprimée en Ah ;

- lors d'une phase d'arrêt du moteur du véhicule déclenchée par un système stop-and-start et/ou une phase de délestage en phase de roulage du véhicule déclenchée par un système de micro-hybridation, la jauge d'état de charge de la batterie est décrémentée de la quantité de charge qui est fournie par la batterie, calculée par la formule suivante :

$$((ICar \times temps \, (s) / 3600) / CNom) \times 100 ;$$

Où *temps* représente la durée en seconde de cette phase de décharge de la batterie, ICar représente l'intensité du courant consommé par le véhicule automobile.

7.  Procédé de gestion énergétique d'un véhicule automobile équipé d'un système stop-and-start et/ou d'un système de micro-hybridation **caractérisé en ce qu'**il comprend la mise en oeuvre d'un procédé d'estimation de l'état de charge de sa batterie selon l'une des revendications 5 ou 6 pour renseigner une jauge d'état de charge, et une étape de pilotage du fonctionnement du système « stop-and-start » et/ou du système de micro-hybridation du véhicule et/ou de détermination de la tension de régulation de l'alternateur du véhicule à partir de cette jauge d'état de charge.

8.  Procédé de gestion énergétique d'un véhicule automobile selon la revendication précédente, **caractérisé en ce qu'**il comprend les étapes suivantes :

    - une étape préalable consistant à mémoriser des données représentatives de l'évolution de la tension aux bornes de la batterie en cas d'arrêt du moteur du véhicule déclenché par le système stop-and-start, ces données mémorisées étant établies pour un certain état de charge seuil de la batterie du véhicule automobile au-dessous duquel il est considéré que le véhicule présenterait un risque de panne, et

    • lors d'une phase de roulage du véhicule automobile, une étape d'arrêt du moteur du véhicule est déclenchée par le système stop-and-start seulement si la jauge d'état de charge de la batterie est supérieure ou égale à une valeur seuil prédéfinie ; puis
    • une étape de mesures de la tension aux bornes de la batterie pendant un tel arrêt du moteur, et
    • une étape de comparaison des mesures de tension avec les données mémorisées lors de l'étape préalable, et une étape d'inhibition du système stop-and-start si une ou plusieurs mesures sont inférieures ou égales à une ou plusieurs données mémorisées correspondantes.
    Et/ou
    • lors d'une phase de roulage, une étape de délestage de l'alternateur du véhicule est déclenchée par le système de micro-hybridation seulement si la jauge d'état de charge est supérieure ou égale à une valeur seuil prédéfinie ; puis
    • une étape de mesures de la tension aux bornes de la batterie pendant un tel délestage si la tension de la batterie est supérieure à une tension minimale admise pour le réseau électrique de bord du véhicule, et
    • une étape de comparaison des mesures de tension avec les données mémorisées lors de l'étape préalable, et une étape d'inhibition du système de « micro-hybridation » si une ou plusieurs mesures sont inférieures ou égales à une ou plusieurs données mémorisées correspondantes.

9.  Procédé de gestion énergétique d'un véhicule automobile selon la revendication précédente, **caractérisé en ce que** l'étape préalable consistant à mémoriser des données représentatives de l'évolution de la tension aux bornes de la batterie en cas d'arrêt du moteur du véhicule déclenché par le système stop-and-start est mise en oeuvre de la manière suivante :

    - mémorisation de plusieurs mesures de la tension aux bornes de la batterie en fonction du temps en cas d'arrêt du moteur du véhicule déclenché par le système stop-and-start à partir d'un état de charge seuil choisi de la batterie ou mémorisation de plusieurs mesures de la tension aux bornes de la batterie en fonction du temps, pour plusieurs températures de la batterie, en cas d'arrêt du moteur du véhicule déclenché par le système stop-and-start à partir d'un état de charge seuil choisi de la batterie ; et

- extrapolation des mesures de tension aux bornes de la batterie pour obtenir une évolution continue de la tension aux bornes de la batterie en fonction du temps en cas d'arrêt du moteur du véhicule déclenché par le système stop-and-start.

10. Procédé de gestion énergétique d'un véhicule automobile selon la revendication 7, **caractérisé en ce qu'**il comprend les étapes suivantes :

- étape préalable de calibration, qui permet de mémoriser le courant obtenu au niveau de l'alternateur du véhicule lors de la mise en oeuvre d'une phase de délestage par le système de micro-hybridation dans le cas d'une batterie chargée à un état de charge seuil, en fonction du courant total consommé par le véhicule, de la température de la batterie et du CCA (Cold Cranking Ampere) ; et

- si la tension de la batterie est sensiblement égale à la valeur minimale admise par le réseau électrique du véhicule en phase de roulage et que le système de micro-hybridation met en oeuvre une phase de délestage :

  • maintien de la tension de régulation de l'alternateur à cette valeur minimale de tension et suivi de l'évolution du courant de l'alternateur, et
  • si le courant de l'alternateur dépasse une valeur mémorisée pour ces mêmes conditions de consommation de courant total par le véhicule, de température de la batterie et de CCA, mise en oeuvre de l'inhibition du système de micro-hybridation.

11. Procédé de gestion énergétique d'un véhicule automobile selon l'une des revendications 7 à 10, **caractérisé en ce qu'**il comprend une étape de régulation de la tension de l'alternateur à une valeur haute permettant la recharge de la batterie en cas d'inhibition du système stop-and-start et/ou de micro-hybridation.

12. Système de gestion d'un véhicule automobile équipé d'un système stop-and-start et/ou d'un système de micro-hybridation, **caractérisé en ce qu'**il comprend des moyens matériels et/ou logiciels comprenant une unité de commande assurant la mise en oeuvre du pilotage de la régulation de la tension de l'alternateur du véhicule automobile et du système « stop-and-start » et/ou du système de micro-hybridation en mettant en oeuvre un procédé de gestion énergétique du véhicule automobile selon l'une des revendications 7 à 11.

13. Véhicule automobile équipé d'une batterie et d'un système « stop-and-start » et/ou d'un système de « micro-hybridation », **caractérisé en ce qu'**il comprend un système de gestion selon la revendication précédente.

14. Support d'enregistrement de données lisible par une unité de commande d'un véhicule automobile, sur lequel est enregistré un programme informatique comprenant des moyens de codes de programme informatique de mise en oeuvre des étapes d'un procédé selon l'une des revendications 1 à 11.

15. Programme informatique comprenant un moyen de codes de programme informatique adapté à la mise en oeuvre des étapes d'un procédé selon l'une des revendications 1 à 11, lorsque le programme est exécuté sur une unité de commande d'un véhicule automobile.

**Patentansprüche**

1. Verfahren zur Schätzung des Stroms an den Klemmen der Batterie eines Kraftfahrzeug, **dadurch gekennzeichnet, dass** es die folgenden Schritte umfasst:

- einen Schritt der Regelung der Spannung des Wechselstromgenerators des Kraftfahrzeugs, in welchem die Regelspannung Ub des Wechselstromgenerators während eines gewissen Zeitraums bei einer Spannung, die der Gleichgewichtsspannung der Batterie nahekommt, stabilisiert wird, was bewirkt, dass der Strom der Batterie ICha gegen null tendiert,

- die Berechnung des Widerstands R der elektrischen Komponenten des Fahrzeugs durch die Beziehung R = UB / Icarb, wobei ICarb der von dem Fahrzeug verbrauchte Strom, der gleich dem von dem Wechselstromgenerator gelieferten Strom ist, während dieses Zeitraums der Regelung der Spannung des Wechselstromgenerators auf eine Spannung ist, die der Gleichgewichtsspannung der Batterie nahekommt,

- Änderung des Regelwertes der Spannung des Wechselstromgenerators auf einen höheren Wert Uh und Berechnung des Ladestroms IChah der Batterie durch die Beziehung IChah = IAlth - Uh / R, wobei IAlth der von dem Wechselstromgenerator gelieferte Strom ist.

2. Verfahren zur Schätzung des Stroms nach dem vorhergehenden Anspruch, **dadurch gekennzeichnet, dass** es einen vorausgehenden Schritt der Kalibrierung umfasst, welcher die Speicherung von Daten, welche die Änderung des Ladestroms an den Klemmen der Batterie in Abhängigkeit von der Regelspannung des Wechselstromgenerators betreffen, in einem elektronischen Speicher umfasst, und anschließend einen Schritt der Verwendung dieser gespeicherten Daten und des berechneten Stroms IChah an den Klemmen der Batterie, um den Strom an den Klemmen der Batterie für jede Regelspannung des Wechselstromgenerators zu schätzen.

3. Verfahren zur Schätzung des Stroms nach einem der vorhergehenden Ansprüche, **dadurch gekennzeichnet, dass** es die Wiederholung der Schritte zur Berechnung eines Ladestroms IChah der Batterie umfasst, um eine Aktualisierung der Schätzung des Stroms der Batterie zu erhalten.

4. Verfahren zur Schätzung des Stroms nach einem der vorhergehenden Ansprüche, **dadurch gekennzeichnet, dass** es die Anwendung einer rechteckförmigen Regelspannung an den Klemmen des Wechselstromgenerators umfasst, die sich zwischen einer niedrigen Spannung Ub, die der Gleichgewichtsspannung der Batterie nahekommt, was bewirkt, dass der Strom der Batterie ICha gegen null tendiert, und einer höheren Spannung Uh, für welche Berechnung des Ladestroms IChah der Batterie durchgeführt wird, ändert.

5. Verfahren zur Schätzung des Ladezustands einer Batterie eines Kraftfahrzeugs, **dadurch gekennzeichnet, dass** es die Durchführung eines Verfahrens zur Schätzung des Stroms an den Klemmen der Batterie nach einem der vorhergehenden Ansprüche und anschließend die Ableitung der diesem geschätzten Strom entsprechenden Ladungsmenge, um einen Anzeiger zu modifizieren, der den Ladezustand der Batterie schätzt, umfasst.

6. Verfahren zur Schätzung des Ladezustands einer Batterie eines Kraftfahrzeugs nach dem vorhergehenden Anspruch, **dadurch gekennzeichnet, dass** es alle oder einen Teil der folgenden Schritte umfasst:

- einen Schritt der Messung der Leerlaufspannung der Batterie während eines Parkens des Kraftfahrzeugs von langer Dauer, einen Schritt der Schätzung des Ladezustands ausgehend von dieser Messung der Leerlaufspannung und einen Schritt der Neuinitialisierung des Ladezustandsanzeigers ausgehend von dieser Schätzung;
- während einer Fahrphase, in der das Laden der Batterie mittels des Wechselstromgenerators durchgeführt wird, der mit einer konstanten Regelspannung beaufschlagt ist, Schätzung des Ladestroms ICha der Batterie, anschließend Berechnung der zu der Batterie übertragenen Ladungsmenge, um den Anzeiger um diesen Wert zu inkrementieren, durch die folgende Formel:

$$((\text{ICha} \times \textit{Zeit (s)} / 3600) / \text{CNom}) \times 100,$$

wobei *Zeit* die Dauer dieser Phase des Fahrens und des Ladens der Batterie in Sekunden darstellt, CNom die Nennkapazität der Batterie darstellt, ausgedrückt in Ah;

- während einer Stillstandsphase des Motors des Fahrzeugs, die durch ein Stopp-Start-System ausgelöst wird, und/oder einer Entlastungsphase in der Fahrphase des Fahrzeugs, die durch ein Mikrohybridsystem ausgelöst wird, wird der Ladezustandsanzeiger der Batterie um die Ladungsmenge dekrementiert, die von der Batterie geliefert wird und durch die folgende Formel berechnet wird:

$$((\text{ICar} \times \textit{Zeit (s)} / 3600) / \text{CNom}) \times 100,$$

wobei *Zeit* die Dauer dieser Entladungsphase der Batterie in Sekunden darstellt, ICar die Stromstärke darstellt, die von dem Kraftfahrzeug aufgenommen wird.

7. Verfahren zum Energiemanagement eines Kraftfahrzeugs, das mit einem Stopp-Start-System und/oder einem Mikrohybridsystem ausgestattet ist, **dadurch gekennzeichnet, dass** es die Durchführung eines Verfahrens zur Schätzung des Ladezustands seiner Batterie nach einem der Ansprüche 5 oder 6 umfasst, um einen Ladezustandsanzeiger mit Informationen zu versorgen, und einen Schritt der Steuerung des Betriebs des Stopp-Start-Systems und/oder des Mikrohybridsystems des Fahrzeugs und/oder der Bestimmung der Regelspannung des Wechselstromgenerators des Fahrzeugs ausgehend von diesem Ladezustandsanzeiger.

8. Verfahren zum Energiemanagement eines Kraftfahrzeugs nach dem vorhergehenden Anspruch, **dadurch gekennzeichnet, dass** es die folgenden Schritte umfasst:

- einen vorausgehenden Schritt, der darin besteht, Daten zu speichern, die für die Änderung der Spannung an den Klemmen der Batterie im Falle einer Abschaltung des Motors des Fahrzeugs, die durch das Stopp-Start-System ausgelöst wird, repräsentativ sind, wobei diese gespeicherten Daten für einen gewissen Schwellenwert-Ladezustand der Batterie des Kraftfahrzeugs ermittelt werden, unterhalb von dem angenommen wird, dass für das Fahrzeug ein Pannenrisiko besteht,
und

• während einer Fahrphase des Kraftfahrzeugs ein Schritt der Abschaltung des Motors des Fahrzeugs nur dann durch das Stopp-Start-System ausgelöst wird, falls der Ladezustandsanzeiger der Batterie größer oder gleich einem vordefinierten Schwellenwert ist; danach
• einen Schritt von Messungen der Spannung an den Klemmen der Batterie während einer solchen Abschaltung des Motors, und
• einen Schritt des Vergleichs der Spannungsmessungen mit den Daten, die während des vorausgehenden Schrittes gespeichert wurden, und einen Schritt der Blockierung des Stopp-Start-Systems, falls ein oder mehrere Messwerte kleiner oder gleich einem oder mehreren entsprechenden gespeicherten Datenwerten sind,
und/oder
• während einer Fahrphase ein Schritt der Entlastung des Wechselstromgenerators des Fahrzeugs nur dann durch das Mikrohybridsystem ausgelöst wird, falls der Ladezustandsanzeiger größer oder gleich einem vordefinierten Schwellenwert ist; danach
• einen Schritt von Messungen der Spannung an den Klemmen der Batterie während einer solchen Entlastung, falls die Spannung der Batterie höher als eine minimale Spannung ist, die für das elektrische Bordnetz des Fahrzeugs zulässig ist, und
• einen Schritt des Vergleichs der Spannungsmessungen mit den Daten, die während des vorausgehenden Schritts gespeichert wurden, und einen Schritt der Blockierung des Mikrohybridsystems, falls ein oder mehrere Messwerte kleiner oder gleich einem oder mehreren entsprechenden gespeicherten Datenwerten sind.

9. Verfahren zum Energiemanagement eines Kraftfahrzeugs nach dem vorhergehenden Anspruch, **dadurch gekennzeichnet, dass** der vorausgehende Schritt, der darin besteht, Daten zu speichern, die für die Änderung der Spannung an den Klemmen der Batterie im Falle einer Abschaltung des Motors des Fahrzeugs, die durch das Stopp-Start-System ausgelöst wird, repräsentativ sind, auf die folgende Weise durchgeführt wird:

- Speicherung mehrerer Messwerte der Spannung an den Klemmen der Batterie in Abhängigkeit von der Zeit im Falle einer Abschaltung des Motors des Fahrzeugs, die durch das Stopp-Start-System ausgelöst wird, ausgehend von einem gewählten Schwellenwert-Ladezustand der Batterie, oder Speicherung mehrerer Messwerte der Spannung an den Klemmen der Batterie in Abhängigkeit von der Zeit für mehrere Temperaturen der Batterie im Falle einer Abschaltung des Motors des Fahrzeugs, die durch das Stopp-Start-System ausgelöst wird, ausgehend von einem gewählten Schwellenwert-Ladezustand der Batterie; und
- Extrapolation der Spannungsmessungen an den Klemmen der Batterie, um eine kontinuierliche Änderung der Spannung an den Klemmen der Batterie in Abhängigkeit von der Zeit im Falle einer Abschaltung des Motors des Fahrzeugs, die durch das Stopp-Start-System ausgelöst wird, zu erhalten.

10. Verfahren zum Energiemanagement eines Kraftfahrzeugs nach Anspruch 7, **dadurch gekennzeichnet, dass** es die folgenden Schritte umfasst:

- - einen vorausgehenden Schritt der Kalibrierung, welcher ermöglicht, den Strom, der am Wechselstromgenerator des Fahrzeugs während der Durchführung einer Entlastungsphase durch das Mikrohybridsystem im Falle einer bis zu einem Schwellenwert-Ladezustand geladenen Batterie erhalten wird, in Abhängigkeit von dem vom Fahrzeug verbrauchten Gesamtstrom, von der Temperatur der Batterie und vom Kaltstartstrom (Cold Cranking Ampere, CCA) zu speichern; und

- falls die Spannung der Batterie im Wesentlichen gleich dem minimalen Wert ist, der für das Stromnetz des Fahrzeugs in der Fahrphase zulässig ist, und das Mikrohybridsystem eine Entlastungsphase durchführt:

• Halten der Regelspannung des Wechselstromgenerators bei diesem minimalen Spannungswert und Verfolgung der Änderung des Stroms des Wechselstromgenerators, und
• falls der Strom des Wechselstromgenerators einen Wert überschreitet, der für dieselben Bedingungen des Gesamtstromverbrauchs durch das Fahrzeugs, der Temperatur der Batterie und des CCA gespeichert ist, Durchführung der Blockierung des Mikrohybridsystems.

11. Verfahren zum Energiemanagement eines Kraftfahrzeugs nach einem der Ansprüche 7 bis 10, **dadurch gekennzeichnet, dass** es einen Schritt der Regelung der Spannung des Wechselstromgenerators auf einen hohen Wert umfasst, der das Wiederaufladen der Batterie im Falle einer Blockierung des Stopp-Start-Systems und/oder Mikrohybridsystems ermöglicht.

12. Managementsystem eines Kraftfahrzeugs, das mit einem Stopp-Start-System und/oder einem Mikrohybridsystem ausgestattet ist, **dadurch gekennzeichnet, dass** es Hardware- und/oder Softwaremittel umfasst, die eine Steuereinheit umfassen, welche die Durchführung der Steuerung der Regelung der Spannung des Wechselstromgenerators des Kraftfahrzeugs und des Stopp-Start-Systems und/oder des Mikrohybridsystems sicherstellt, indem es ein Verfahren zum Energiemanagement des Kraftfahrzeugs nach einem der Ansprüche 7 bis 11 durchführt.

13. Kraftfahrzeug, welches mit einer Batterie und einem Stopp-Start-System und/oder einem Mikrohybridsystem ausgestattet ist, **dadurch gekennzeichnet, dass** es ein Managementsystem nach dem vorhergehenden Anspruch umfasst.

14. Datenaufzeichnungsträger, der von einer Steuereinheit eines Kraftfahrzeugs lesbar ist und auf dem ein Computerprogramm gespeichert ist, das Computerprogramm-Codemittel zur Durchführung der Schritte eines Verfahrens nach einem der Ansprüche 1 bis 11 umfasst.

15. Computerprogramm, welches ein Computerprogramm-Codemittel umfasst, das für die Durchführung der Schritte eines Verfahrens nach einem der Ansprüche 1 bis 11 geeignet ist, wenn das Programm auf einer Steuereinheit eines Kraftfahrzeugs ausgeführt wird.

**Claims**

1. Method for estimating the current at the terminals of the battery of a motor vehicle, **characterized in that** it comprises the following steps:

- a step for regulating the voltage of the motor vehicle alternator during which the alternator regulating voltage Ub is stabilized for a certain period of time at a voltage close to the equilibrium voltage of the battery, this causing the battery current ICha to tend towards zero;
- calculation of the resistance R of the electrical components of the vehicle by means of the relation R = Ub / ICarb where ICarb is the current used by the vehicle, equal to the current supplied by the alternator, during this period where the voltage of the alternator is regulated to a voltage close to the equilibrium voltage of the battery;
- changing the value for regulation of the alternator voltage to a higher value Uh and calculating the charging current IChah of the battery by means of the relation IChah = IAlth - Uh / R, where IAlth is the current supplied by the alternator.

2. Method for estimating the current according to the preceding claim, **characterized in that** it comprises a prior calibration step which comprises storage in an electronic memory of data regarding the variation of the charge current at the battery terminals in relation to the alternator regulating voltage, followed by a step of using this stored data and the calculated current IChah at the battery terminals in order to estimate the current at the battery terminals for any alternator regulating voltage.

3. Method for estimating the current according to either of the preceding claims, **characterized in that** it comprises the repetition of the steps for calculation of a battery charging current IChah in order to update the estimation of the battery current.

4.  Method for estimating the current according to one of the preceding claims, **characterized in that** it comprises applying a regulating voltage at the terminals of the alternator in the form of a square pulse, between a low voltage Ub close to the equilibrium voltage of the battery, causing the battery current ICha to tend towards zero, and a higher voltage Uh for which the calculation of the battery charging current IChah is used.

5.  Method for estimating the state of charge of a motor vehicle battery, **characterized in that** it comprises implementing a method for estimating the current at the battery terminals according to one of the preceding claims, followed by deduction of the quantity of charge corresponding to this estimated current in order to modify a gauge estimating the state of charge of the battery.

6.  Method for estimating the state of charge of a motor vehicle battery according to the preceding claim, **characterized in that** it comprises all or some of the following steps:

    - a step for measuring the zero-load voltage of the battery when the motor vehicle is at a standstill for a long time, a step for estimating the state of charge based on this measurement of the zero-load voltage, and a step for reinitialization of the state-of-charge gauge based on this estimate:
    - during a travel phase performing charging of the battery using the alternator subject to a constant regulating voltage, estimation of the battery charging current ICha, followed by calculation of the quantity of charge transmitted to the battery in order to increase the gauge by this value using the following formula:

    $$((\text{ICha } x \text{ time (s) } / \text{ 3600}) / \text{ CNom}) x \text{ 100}$$

    where *time* represents the duration in seconds of this travel and battery charging phase,
    CNom represents the nominal capacity of the battery, expressed in Ah;

    - during a stopping phase of the vehicle engine triggered by a stop-and-start system and/or load-redution phase during travel of the vehicle triggered by a micro-hybrid system, the state-of-charge gauge of the battery is decreased by the quantity of charge which is supplied by the battery, calculated using the following formula:

    $$((\text{ICar } x \text{ time (s) } / \text{ 3600}) / \text{ CNom}) x \text{ 100}$$

    where *time* represents the duration in seconds of this battery discharging phase,
    ICar represents the intensity of the current used by the motor vehicle.

7.  Method for energy management of a motor vehicle equipped with a stop-and-start system and/or a micro-hybrid system, **characterized in that** it comprises the implementation of a method for estimating the state of charge of its battery according to either of Claims 5 and 6 in order to inform a state-of-charge gauge, and a step for controlling the operation of the stop-and-start system and/or micro-hybrid system of the vehicle and/or for determining the regulating voltage of the vehicle alternator based on this state-of-charge gauge.

8.  Method for energy management of a motor vehicle according to the preceding claim, **characterized in that** it comprises the following steps:

    - a prior step consisting in storing data representing the progression of the voltage at the battery terminals in the event of stopping of the vehicle engine triggered by the stop-and-start system, said stored data being established for a certain state-of-charge threshold of the motor vehicle battery, below which it is considered that the vehicle would be subject to the risk of breakdown,
    and

    • during a travel phase of the motor vehicle, a step for stopping the vehicle engine is triggered by the stop-and-start system only if the state-of-charge gauge of the battery is higher than or equal to a predefined threshold value, followed by
    • a step for measuring the voltage at the battery terminals during such an engine stoppage, and

• a step for comparing the voltage measurements with the data stored during the prior step, and a step for disabling the stop-and-start system if one or more measurements are less than or equal to one or more corresponding stored data values;
and/or
• during a travel phase a step for reducing the load of the vehicle alternator is triggered by the micro-hybrid system only if the state-of-charge gauge is higher than or equal to a predefined threshold value; followed by
• a step for measuring the voltage at the battery terminals during such a load-reduction step if the voltage of the battery is higher than a minimum voltage permitted for the on-board electrical system of the vehicle, and
• a step for comparing the voltage measurements with the data stored during the prior step, and a step for disabling the micro-hybrid system if one or more measurements are less than or equal to one or more corresponding stored data values.

9. Method for energy management of a motor vehicle according to the preceding claim, **characterized in that** the prior step consisting in storing data representing the progression of the voltage at the battery terminals in the event of stoppage of the vehicle engine triggered by the stop-and-start system is implemented in the following manner:

- storage of several measurements of the voltage at the battery terminals against time in the event of stoppage of the vehicle engine triggered by the stop-and-start system based on a chosen state-of-charge threshold of the battery or storage of several voltage measurements at the battery terminals against time, for several temperatures of the battery, in the event of stoppage of the vehicle engine triggered by the stop-and-start system based on a chosen state-of-charge threshold of the battery; and
- extrapolation of the voltage measurements at the battery terminals in order to obtain a continuous progression of the voltage at the battery terminals against time in the event of stoppage of the vehicle engine triggered by the stop-and-start system.

10. Method for energy management of a motor vehicle according to Claim 7, **characterized in that** it comprises the following steps:

- prior calibration step, which allows storage of the current obtained at the vehicle alternator during implementation of a load-reduction phase by the micro-hybrid system in the event of a battery charged to a state-of-charge threshold, in relation to the total current used by the vehicle, the battery temperature and the CCA (Cold Cranking Ampere); and
- if the battery voltage is substantially the same as the minimum value permitted by the vehicle electrical system during travel and the micro-hybrid system implements a load-reduction phase:

• keeping the alternator regulating voltage at this minimum voltage value, and monitoring the progression of the alternator current, and
• if the alternator current exceeds a value stored for these same conditions of total current used by the vehicle, battery temperature and CCA, disabling the micro-hybrid system.

11. Method for energy management of a motor vehicle according to one of Claims 7 to 10, **characterized in that** it comprises a step of regulating the alternator voltage to a high value allowing recharging of the battery in the event of disabling of the stop-and-start and/or micro-hybrid system.

12. Management system for a motor vehicle equipped with a stop-and-start system and/or a micro-hybrid system, **characterized in that** it comprises material and/or software means comprising a control unit performing control of voltage regulation of the motor vehicle alternator and the stop-and-start system and/or micro-hybrid system using a method for energy management of the motor vehicle according to one of Claims 7 to 11.

13. Motor vehicle equipped with a battery and a stop-and-start system and/or a micro-hybrid system, **characterized in that** it comprises a management system according to the preceding claim.

14. Data recording medium which can be read by a control unit of a motor vehicle and which has, recorded on it, a data processing program comprising data processing program code means for implementing steps of a method according to one of Claims 1 to 11.

15. Data processing program comprising a data processing programming code means adapted to implement steps of a method according to one of Claims 1 to 11, when the program is executed on a control unit of a motor vehicle.

# FIG.1

Voltage

1

2

Time

# FIG.2

Uh

Ub                    Ub

# FIG.3

Charge Current

120
115
110
105
100
95
90
85
80
75
70
65
60
55
50
45
40
35
30
25
20
15
10
5
0

4        5

12,6 12,7 12,8 12,9 13,0 13,1 13,2 13,3 13,4 13,5 13,6 13,7 13,8 13,9 14,0 14,1 14,2 14,3 14,4 14,5 14,6 14,7 14,8 14,9 15,0 15,1 15,2

Ub                        UReg in V                        Uh

FIG.4

FIG.5

FIG.6

FIG.7

FIG.8

## FIG.9

Icar

15

14

16

Icar

t

## FIG.10

Icar

15

14

IAltsocs

16

Icar

ti

t

**EP 3 087 654 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5712786 A
- JP 2009055655 B

- FR 2983653